# EUROPEAN PATENT SPECIFICATION

(11) **EP 2 419 952 B1**
(45) Date of publication and mention of the grant of the patent: **04.06.2014**
(21) Application number: 10718415.2
(22) Date of filing: 12.04.2010
(51) Int. Cl.: H01M 4/24, H01M 4/26, H01M 4/62, H01M 10/30, H01M 10/32, H01M 12/08, H01M 10/24

(54) **ELECTRICALLY RECHARGEABLE BATTERY WITH ZN ELECTRODE, AND METHOD FOR MANUFACTURING SAID BATTERY**
ELEKTRISCH WIEDERAUFLADBARE BATTERIE MIT ZN-ELEKTRODE UND VERFAHREN ZUR HERSTELLUNG DER BATTERIE
BATTERIE ÉLECTRIQUE RECHARGEABLE DOTÉE D'UNE ÉLECTRODE ZN, ET PROCÉDÉ POUR FABRIQUER LADITE BATTERIE

(30) Priority: 15.04.2009 US 169405 P
(43) Date of publication of application: 22.02.2012
(73) Proprietor: Martirosyan, Suren, Yerevan 0010 (AM); Guillonnet, Didier, 06000 Nice (FR)
(72) Inventor: MARTIROSYAN, Suren, Yerevan, 0010 (AM)
(74) Representative: de la Bigne, Guillaume Michel Marie
(86) International application number: PCT/AM2010/000001
(87) International publication number: WO 2010/118442

(56) References cited:
- WO-A1-2006/111835
- JP-A- 62 123 656
- US-A- 3 671 319
- US-A- 3 703 413
- US-A- 3 876 470
- US-A- 4 152 224
- US-A- 4 307 164

## Description

The present invention relates to a rechargeable zinc electrode for the use in rechargeable batteries. More particularly, the invention relates to a electrically rechargeable porous zinc electrode incorporating Low Hydrogen Overvoltage Substances (LHOS) thus presenting reduced dendritic propagation, lesser electrode passivation and shape change and finally resulting in an increased number of charge/discharge cycles.

The present invention also relates to a method of producing the rechargeable zinc electrode and to an electrically rechargeable batterie incorporating such electrode as anode.

### BACKGROUND

The main constituents of active material of zinc electrodes are:
- in reduced state: metallic zinc;
- and, in oxidized states: zinc oxide, ZnO, zinc hydroxide, Zn(OH)₂ and zincate ion species such as Zn(OH)₄²⁻, etc..

Zn has long been used in many battery systems because of its high capacity and high negative potential. High hydrogen overvoltage on Zn permits its use in aqueous electrolytes. However, Zn electrode exhibits poor reversibility suffering from well-known shortcomings: dendritic propagation, passivation, zincate ion aging, formation of inactive islets on the electrode, active mass redistribution or "shape change", active mass relocation.

In strong alkaline solution, the main reaction on Zn electrode during discharge is as follows:

Zn - 2e + 2OH⁻ => Zn(OH)_{2 solid} (1)

Zn - 2e + 2OH⁻ => ZnO _{solid} + H₂O (2)

Along with these reactions, dissolution of zinc into zincate electrolyte also occurs, usually creating supersaturated zincate solutions after full discharge:

Zn - 2e + 4 OH⁻ => Zn(OH)₄²⁻ ₛₒₗᵤₜᵢₒₙ (3)

Zincate ions could be present in various forms including in the form of polymeric chains as depended on the charge-discharge conditions, electrolyte composition and presence of additives. During charging the reverse processes are occurring on electrically rechargeable batteries with Zn electrode:

Zn(OH)_{2 solid} + 2e => Zn + 2OH⁻ (4)

ZnO _{solid} + H₂O + 2e => Zn + 2OH⁻ (5)

Zn(OH)₄²⁻ ₛₒₗᵤₜᵢₒₙ + 2e => Zn + 4OH⁻ (6)

Also, in alkaline media, hydrogen is evolved on metallic and/or electrically conducting substances' surfaces in contact with Zn electrode by the following reaction:

2H₂O + 2e⁻ => 2OH⁻ + H₂ (7)

Thereafter we explain a few basis of electro-chemistry.

Polarization describes how far the electrode potential is from its equilibrium state (or even more correctly from its stationary potential state) when current is passing through the electrode.

Overvoltage is applicable to a particular process, for example to hydrogen evolution process and it has a kinetic meaning. For hydrogen evolution reaction (7), when the current is flowing, the *overvoltage-current density* relationship usually is described by Tafel equation: η = α + b l*gi*, where *i* is the current density (current density is the rate of the electrochemical reaction on unit surface area), and η is the overvoltage (also called overpotential); here the current density is expressed in A.cm⁻², and the terms η and in Volts. In Tafel equation, parameter α primarily defines the energy requirement to produce unit quantity of hydrogen on the cathode. Actually, the lesser the α the easier the hydrogen evolution occurs on the specific surface. However, α depends also on electrolyte composition, presence of surfactant active materials, temperature, state of surface condition of electrode material, duration of hydrogen evolvement, etc. Thereafter, this α parameter relative to the reaction (7) could be termed as Hydrogen Overvoltage on the particular electrode material and for specific conditions. This defines the meaning of the term "Hydrogen Overvoltage" as used in the present patent application, including the claims.

The higher the Hydrogen Overvoltage, the higher is the energy requirement to produce the same quantity of hydrogen.

On the other hand, the term b in Tafel eq. is almost constant for most metals (around 0.12 V).

In alkaline media, hydrogen overvoltage has the following approximate values (in Volts) on the following metals: Pt ≈ 0.34; Pd ≈ 0.5; Co ≈ 0.6; Ni ≈ 0.65; Fe ≈ 0.75; Ag ≈ 0.75; Cu ≈ 0.95; Cd ≈ 1.0; Zn ≈ 1.3; Pb ≈ 1.35; Hg ≈ 1.5 (A. Levin. Fundamentals of Theoretical Electrochemistry. Moscow, 1972, MIR Publishing House, in Russian).

In the present patent application, including the claims, we call Low Hydrogen Overvoltage Substance, or in short LHOS, any substance for which the Hydrogen Overvoltage as above defined (the *a* value) is lower at least by 0.5 Volt than the one of Zinc in the same conditions.

Zinc electrode self-discharge is caused by oxidation of Zn through two mechanisms: (i) by chemical interaction with oxygen dissolved in alkaline electrolyte and, (ii) at a larger extent, by the so-called hydrogen depolarization when zinc is oxidized with concurrent evolution of hydrogen. In this case an inner galvanic couple is formed within the Zn electrode. One pole (negative pole) of this galvanic cell is the zinc electrode itself, where zinc is oxidized, and the other pole is hydrogen electrode (could be of any metal or electric conductor, including Zn), on which hydrogen is evolved by the reaction (7).

This reaction (7) takes place at ca -0.82 V as compared with reactions (1-6) which holds at ca -1.2 V for strongly alkaline media (pH>14). Because of this potential differences of Zn and hydrogen electrodes, Zn electrode is thermodynamically unstable. Zn-hydrogen inner galvanic cell's energy is impossible to utilize and the energy is released in the form of heat. It is to be noted that if we stifle hydrogen evolution by any means (by increasing Hydrogen Overpotential on Zn), then the self-discharge of Zn is decreased accordingly. Yet, on pure Zn, only very little hydrogen is possible to evolve, because Hydrogen Overvoltage (the α value in the Tafel equation) is very high on Zn. As it is even higher on Hg, that's why amalgamation decreases the self-discharge of Zn electrodes and amalgamation is proposed in many Patents.

When no current flows through the electrode and the electrode is in equilibrium state, then, every part of Zn electrode (without additives) has the same electrode potential, i.e. is equipotential. However, the electric field is distributed unevenly throughout electrode surface when electric current is flowing through the electrode. Many factors affect field distribution: shape of the electrode, porosity, thickness of the electrode, the throwing power of the electrolyte, presence of impurities both in the electrode and electrolyte, surface tortuosity. On planar electrodes (as is the case with our Zn electrode) the field intensity (hence the current density and electrode polarization on the particular electrode site) is higher on the edges than in the middle part of the electrode. With zinc-air battery having auxiliary electrode, the planar electrodes are polarized on one side, and the general cathodic polarization of the side of the electrode which faces the auxiliary electrode is higher than the other side during battery charging (reduction process takes place on Zn electrode). However, during discharge, the surface of Zn electrode facing the air electrode is polarized anodically more than the surface of the Zn electrode facing to auxiliary electrode. Polarization is also higher on the electrode protuberances, juts and asperities. These are the sites where dendrites are initiating. So, the appearance of dendrites is mostly probable on electrode-edge-protuberances. It is to be noted that electric field distribution in the electrode is also affected by the type of the used counter electrode and its distance from Zn electrode. Thus, in conclusion, the current density on the Zn electrode is distributed quite unevenly. Besides all the stated factors, field distribution (current distribution, electrode potential distribution) on the Zn electrode is changed during charging and discharging times. During charging, gradually, the electrode polarization increases and the dendrites form more and more intensely. Additives within the Zn electrode affect on the Zn electrode behavior differently. If the additives are of indifferent kind, they usually are designed to increase the electrical conductance of active mass only, and they practically have no impact on field distribution. However, unless an electrochemical or chemical process takes place on the additive, electrode potential even distribution is disrupted even at equilibrium state, as well as the electrode's polarization pattern is affected considerably during charging or discharging periods.

In the presence of LHOS an inner galvanic couple within the Zn electrode is formed and a chemical process can occur between Zn and LHOS which greatly changes the Zn electrode behavior. Particularly, as depended upon the type and quantity of LHOS, it is possible that an anodic process (in this case, on these sites, the electrode potential becomes more positive vs. the equilibrium potential) is induced on some parts (sites) of the Zn electrode with follow up oxidation of Zn. This is possible even while Zn electrode is - in overall - under the cathodic polarization, i.e. during the battery charging.

Failure analysis of Zn electrode shows that the most problematic issue is the short circuiting during charging caused by Zn dendrites. In alkaline batteries - incorporating Zn electrode - part of the electrolytic zincate is reduced back into Zn in the form of dendrites mostly at the end-part of battery charging. If no special measures are taken, these dendrites soon electrically bridge the poles of the accumulator and short-circuit it. On the other hand, the supersaturated zincate solutions tend spontaneously to become saturated leading to precipitation of zinc oxide or hydroxide in the electrolyte, both within the pores of the Zn electrode and outside of the Zn electrode compartment.

Actually, many of Zn electrode problems are coming from presence of these soluble zincate ion species in the electrolyte.

Several approaches are described in literature for reducing dendritic propagation.

One of the approaches assumes additives which could make an alloy with Zn dendrites and change its morphology, while others, particularly calcium zincate while having lesser solubility reduces the possibility of appearance of dendrites. In US Patent 5,460,899 Ca(OH)₂ and conductive matrix including metallic oxides are proposed to add into the active mass of Zn electrode. Quoted usable metallic oxide materials are PbO, Bi₂O₃, CdO, Ga₂O₃ and Ti₂O₃. However, they have little influence and could not effectively reduce dendritic propagation.

Several additives are proposed for reducing zincate concentration in the electrolyte, such as sequestering agents, aluminates, calcium zincates, etc. Some metal additives, e.g. Pb, Sn, Cd, introduced into Zn electrode active mass, change the morphology of dendrites by alloying with Zn and also increase Zn electrode active mass conductivity. However, the ability of these compounds to stifle the dendrites is either low or diminishes over time due to leaching or decomposing, or some other reason.

Many Patents describe an alternative approach which consists in using improved separators to withstand dendrites. Particularly, rayon type separators have been used until recently throughout in Zn batteries for reduction of dendrites' propagation through the separator. However, if effective, all the described separators do adversely affect on Zn battery's other characteristics: decrease specific characteristics; usually are not long-lasting, or soon diminish their ability to withstand dendrites.

Another alternative approach is described in the Patent WO 02/075830 and consists in adding surfactant active materials (fatty acid or salt, ester or derivative thereof); or alkyl sulfonic acid (or a salt, ester or derivative thereof) in order to increase Zn deposition overvoltage from electrolyte thus diminishing the chance of Zn reduction from the zincate. However, surfactant active materials are usually of organic nature, which tend to hydrolyze in strongly alkaline media and loss their surfactant activity with cycling.

Yet another alternative approach is to use a non-stationary charging method, such as described in Armenian Patent # 1523 A2, which proposes to shift the dendrites' growth from counter electrode towards the inner faces of double Zn electrodes.

Zn dendrites could also be removed by mechanical action: electrode rotation, vibration, etc.

However, all these methods are bulky, they are technically-hard-to-realize and they decrease specific characteristics of the batteries.

It is to be pointed out that the dendritic propagation and other shortcomings of zinc electrode are considered so insurmountable that an alternative solution to "mechanically rechargeable" Zn-air batteries have been proposed and developed. Both the electrolyte and active material (zinc) are substituted with new ones after each discharge of the batteries. However, servicing problems make mechanically rechargeable systems less attractive than electrically rechargeable ones; also the specific characteristics are inferior to that of electrically rechargeable ones.

The literature also describes different approaches for reducing passivation.

Passivation of the Zn electrode occurs during cell discharge when polarization on some areas of Zn electrode reaches some critical value and passive layers or compounds (usually of γ-ZnO type) are formed. Then, these passive layers or passive compounds no longer participate in electrochemical processes, thus some of the active mass of Zn electrode becomes useless. Besides decreasing the specific capacity of the Zn electrode, passivation also increases the polarization as lesser useful active mass is involved in charge-discharge processes. Passivation enhances when current density on unit active mass is increasing, which means that the more is the discharge current density the more the electrode's propensity to passivation is. Possibly, passivation could deepen: (i) when some part of active mass losses electrical contact with current-collector; (ii) when active mass of Zn electrode agglomerates (losses its porosity); and (iii) when shape change occurs which also reduces the active mass porosity. Passivation is possible to occur also with Zn electrodes, which, for long periods of time, stay idle. As the porosity increases electrode's actual surface area - and, hence, decreases Zn electrode polarization - therefore, passivation occurs at lesser extend with porous electrodes. As the porosity of Zn electrode decreases with cycling so the chance of Zn electrode passivation does increase. Usually, to fight electrode passivation, the following approaches are proposed: (i) use of depassivators, sometimes added into the Zn electrode active mass or in the electrolyte; (ii) use of organic gelling agent or polymer to withstand electrode agglomeration; (iii) use of various particle size distributions in the active mass composition for reaching optimal porosity, etc. However, all these approaches usually tend to loss their power over cycling or have only small effect during battery discharge.

Literature also describes different approaches for reducing shape change.

Zn electrode shape change is a result of uneven distribution of zincate ion concentration over the Zn electrode height, and nonuniform Zn electrode polarization, when current density and polarization is higher on the edges than at the center part of the Zn electrode. These processes tend to accumulate active mass from the edges to the center and lower parts of Zn electrode, with concurrent reduction of the surface area of the Zn electrode and agglomeration of the active mass. Organic gelling agents with high ionic conductivity are proposed in the Patent WO /2006/111835, where Zn electrode active mass is encapsulated in the matrix. However, this approach increases Zn electrode polarization, which adversely affects on other characteristics of Zn electrode due to diffusion difficulties and presence of gelling agents. In US Patent 4332871 cement is proposed as additive for reducing shape change and dendritic propagation, but with limited effect.

Pore plugging, active mass relocation, agglomeration, zincate ion aging and shape change get exacerbated with cycling.

In literature, zincate ion aging mechanism is primarily described in the following manner. After discharge, zincate ions become supersaturated in strongly alkaline media. These supersaturated zincate solution tends to became saturated with the deposition of ZnO or Zn(OH)₂ outside the Zn electrode compartment. Therefore, the active mass of Zn electrode becomes depleted with cycling as zinc washes out of Zn electrode compartment. This is called zincate ion aging. Lower alkali concentration electrolytes could reduce zincate ion aging. However, low electrolyte concentration adversely affects on other aspects of Zn electrode reversible work.

Formation of inactive islets in Zn electrode primarily is a result of poor electric conductance between the active mass particles, as well as between active mass particles and the current collector. Powders, possessing high electrical conductivity, are proposed to add into active mass, such as graphite or metal powders. However, addition of electrochemically inert materials in active mass has little impact on cyclability of Zn electrode due to other shortcoming of Zn electrode. Active mass relocation occurs in three-electrode battery system, such as in zinc-air batteries incorporating non-bifunctional air electrodes. In this system, the major part of charging front of porous Zn electrode confronts counter electrode, as the overvoltage on this side of Zn electrode is higher than the other side, causing predominant precipitation of zinc (from zincate solution) on this side of Zn electrode. On the other hand, during discharge, the side of Zn electrode facing to air electrode, oxidizes deeper than the side of Zn electrode facing to counter electrode with follow-up increased dissolution of zinc on the side of Zn electrode facing to air electrode. This different distribution of charge-discharge front makes active mass of the Zn electrode to shift relative to current collector because zinc predominantly is dissolved on the side of Zn electrode facing the oxygen electrode during the battery discharge, while the zinc deposits from zincate electrolyte on the side of Zn electrode facing the auxiliary electrode during the battery charging. This phenomenon is what we call active mass relocation. Active mass relocation is possible in Zn-air batteries with auxiliary electrode for charging the Zn electrode. Consequently, active mass relocation is a result of uneven distribution of two sides of Zn electrode during charging and discharging. However, there are no data available in literature for mollification of this active mass relocation effect.

In Patent WO 2005/038967 an electronegative metal, such as Al, Zn, Mg and Fe containing LHOS is proposed. However, these metals serve as a mean to increase the rate of evolution of hydrogen, which is an active material in hydrogen-containing power sources, such as metal-air fuel cells and metal hydride cells. In these cells the active material is the hydrogen and not the zinc, as in the present patent application is. In Patent WO 2005/038967, LHOS type material is used for enhancing hydrogen production rates, and the hydrogen is the active material of battery system. However, in the present patent application, the active material is the zinc containing LHOS which is not changing the basic electrochemistry of the Zn electrode.

As described in Background, most of Zn electrode problems are coming from uneven distribution of polarization throughout the Zn electrode, as well as by overall Zn electrode high polarization. Actually, on the surface of Zn electrode always some sites are present where polarization is higher than on the surroundings. These highly polarized sites are the places from whence dendrites are initiating (during charging) or passivation occurs (during battery discharge). In addition, uneven distribution of charging and discharging fronts exacerbates other problems of Zn electrode reversible work already described.

The aim of the present patent application is to provide an alternative solution to these problems by decreasing the uneven distribution of polarization on various parts of Zn electrode by averaging Zn electrode polarization on throughout the Zn electrode.

Surprisingly, the applicant has found that significant lowering of the dendrites growth, shape change and passivation can be achieved by an electrode according to claim 1 and a method according to claim 9.

The first object of the invention is a rechargeable zinc electrode according to claim 1 for the use in an electrically rechargeable battery with alkaline aqueous electrolyte wherein said electrode contains in its active mass at least one substance LHOS having Hydrogen Overvoltage value at least 0.5 Volt lower than that of zinc in the same conditions.

The LHOS is a metal chosen from the group consisting of Pt, Pd, Ni, Fe, Mn metals or their alloys. Other metals and their compounds, such as Ag, Cu in part also Co are not recommended because they easily are covered by Zn deposit during accumulator charging and lose their activity. However, all the known metals - including Ag, Co and Cu - could effectively be used as LHOS in the form of alloy or metal mixture together with LHOS-effective metals.

Alternatively, the LHOS is a compound of Pt, Pd, Ni, Fe, Mn metals such as salts (such as NiSO₄*7H₂O, etc.) or their precursors in the form of metallo-organic compounds which could undergo chemical/electrochemical modifications during cycling and acquire LHOS power.

Also LHOS could be deposited on some carriers, such as silicates or polymers.

Preferably, the Zn electrode active mass contains 0.5-10 weight% of LHOS.

Yet more preferably, at least one LHOS is introduced at a higher concentration in the zone where the electric field is higher, typically on the edges, the bottom side and on the side surfaces of the said electrode.

In zinc-air battery system with auxiliary electrode used to charge the Zn electrode, the concentration of LHOS preferably is to be higher on the side of Zn electrode facing to auxiliary electrode than on the reverse side of Zn electrode.

In another preferred embodiment the LHOS quantity is increasing gradually from inner part of the electrode, close to current collector, up to electrode surface. The concentration of LHOS is then higher at the Zn electrode surface.

In yet another preferred embodiment the zinc electrode is composed of at least two layers, and at least one of the layers contains LHOS.

The second object of the invention is a method according to claim 9 for the production of an electrode for the use in an electrically rechargeable battery with alkaline aqueous electrolyte, said electrode contains in its active mass at least one LHOS, said method comprises the addition of LHOS particles in the active mass of Zn electrode.

In this method a recommended way is the application of LHOS on the total or partial surface of the Zn electrode, in the form of a powder, the particles of which have an average diameter between 10 to 1000 µm.

A further aspect concerns an electrically rechargeable battery comprising at least one rechargeable zinc anode (electrode) according to the first object of the invention and a suitable cathode.

More particularly, the battery may include a strong alkaline electrolyte, for example 2-10 M KOH or NaOH with or without additives.

Even more particularly, an electrical rechargeable battery with rechargeable zinc electrode as above defined comprises at least an air electrode as cathode. The air electrode can be such as the ones produced by the company MEET (Korea, www.mee-t.com) or by the company Electric Fuel (USA).

In a preferred embodiment an electrical rechargeable battery with rechargeable zinc electrode as above defined comprises at least a nickel-oxide or silver electrodes as cathode.

The mechanism of LHOS action given below is the presumed mechanism but this explanation must be considered as a hypothesis and cannot limit this invention in any points. As the hydrogen overvoltage on LHOS is lower than on the metallic zinc, hence an electrochemical galvanic couple (zinc-hydrogen) is formed, which shifts these sites' potential (on and around the LHOS) towards more positive values. The more the potential difference within the inner galvanic cell the more is the inner galvanic current and the more is the oxidation rate of the metallic zinc. While taking into account that dendrites are initiating on the more negative potential sites of the Zn electrode, hence the potential difference between the site of dendrite and LHOS is higher (as the polarization is higher there) than generally on the electrode. This means that Zn would predominantly would be oxidized (dissolved) from these dendrite sites, meaning that Zn dendrites would appear with less probability when LHOS is present, than without LHOS. It is interesting to note, that this LHOS effect is pronounced at higher charging current loads, which, of course, is a useful feature. Also, this LHOS action mechanism reduces the chance of initiation of dendrites on the most vulnerable parts of Zn electrode surface area.

LHOS effect - due to forming of inner galvanic couple - also could have impact during battery idling and even during battery discharge. However, gradually LHOS action diminishes during discharge to the point when Zn electrode potential reaches down to ca. -0.8 V, i.e. when Zn electrode potential reaches to that of hydrogen electrode potential. LHOS action on Zn electrode could easily be regulated by variation of LHOS composition, quantity and particle size. Important is also the conductivity gain of Zn electrode's active mass by the addition of LHOS.

Presence of LHOS within the Zn electrode reduces Zn electrode dendritic propagation. This is because dendrites initiate from some spots of Zn electrode surface, where the polarization is higher than average on the Zn electrode and the dendrites predominantly are initiating at the end-time of Zn electrode charging process. Presence of LHOS in the Zn electrode reduces dendritic propagation by: (i) leveling (averaging) potential distribution over the Zn electrode, (ii) forming galvanic couple with the sites of Zn electrode, where polarization is higher from whence dendrites predominantly are initiating, thus turning these dendrite-initiating sites less electronegative. Actually, the higher the Zn electrode cathodic polarization, the most pronounced the polarization averaging (leveling) and the most pronounced the LHOS effect is.

Presence of LHOS within the Zn electrode reduces Zn electrode passivation. This is because LHOS averages potential distribution over Zn electrode with lesser possibility of passivation. This is because no passivation critical value reached at passivation centers during anodic polarization of Zn electrode Also, LHOS always keeps its active mass surroundings always active, thus reducing the current density per active mass, hence lesser is the possibility of reaching the passivation critical potential when passive layers are formed which are electrochemically inactive.

Presence of LHOS in Zn electrode reduces the chance of formation of inactive islets in the active mass of Zn electrode. This is because LHOS always keeps every part of Zn electrode active due to formation of galvanic couples (zinc-hydrogen) at LHOS sites. Also, this, in its turn, reduces the chance of electrode passivation. Presence of LHOS in Zn electrode reduces zincate ion aging. This is because LHOS averages Zn electrode polarization thus reducing the chance of getting supersaturated zincate solution, which predominantly is formed on the electrode sites being deeply polarized anodically.

Presence of LHOS in the Zn electrode subdues active mass relocation in zinc-air electrode. This is because LHOS forms zinc-hydrogen galvanic couples in all parts of Zn electrode, which averages zinc overvoltage distribution on both surfaces of Zn electrode.

Compared with regular Zn electrode, LHOS-containing Zn electrode possesses higher stability and higher discharge efficiency (high ratio of discharge capacity to that of Zn electrode theoretical value) due to reduced dendritic propagation, agglomeration of active mass, shape change, passivation.

In the following we give a detailed description of the Invention. According to the present patent application, high-performance, long service-life Zn electrode is provided by the introduction of LHOS into the composition of Zn electrode.

The electrodes can be prepared by several methods including the following:
- Addition of the electrode constituents (zinc oxide powder, LHOS, etc.) into the binder solution;
- Preparation of active mass paste by well mixing the constituents;
- Applying the active mass paste onto the current collector;
- Drying.

Zinc oxide, which is the active mass of Zn electrode, is of GOST 10262-62 type (former Soviet Union certificate). Zinc powder is also possible to use during the preparation of Zn electrode.

Industrially available current collectors could be used during the preparation of Zn electrode. They could be made of iron or copper and coated by Zn, Cd, Ni or without coating. As current collector, for instance, the ones manufactured at Lugansk (Ukraine) alkaline battery production plant for Zn batteries could be used. This current collector is a copper mesh covered with amalgamated zinc deposit. Multi-purpose additives are used in Zn electrode's active mass composition. This invention does not exclude any type of additive along with LHOS. LHOS is in a form of powder or particles or fine mesh made of LHOS metals or LHOS compounds positioned predominantly on the surface part of Zn electrode, or they are deposited on any type of carrier. If mesh or grid type of LHOS is used, it is preferably has no electrical contact with current collector. LHOS metals or LHOS compounds are such, on which hydrogen evolution overvoltage considerably is lesser (over 0.5 V) than the hydrogen overvoltage on metallic zinc. LHOS metal or LHOS compounds are such that make zinc-hydrogen galvanic couple. LHOS metal or LHOS compounds are such, on which hydrogen evolves. LHOS metal or LHOS compounds are such, which are present within the Zn electrode in the form of powder or particles or some other form and make these LHOS-containing sites and its surrounding parts electrochemically active, independently, whether, as a precursor, the LHOS was added into the Zn electrode's active mass composition or the LHOS-precursor has been introduced into the Zn battery electrolyte to further deposit on Zn electrode as LHOS.

However, LHOS metal or LHOS compounds does not turn Zn electrode into hydrogen electrode, and the current-producing electrochemical process on the LHOS-containing Zn electrode also is governed by zinc oxidation-reduction electrochemical processes, as is the case with regular Zn electrodes containing no LHOS. Predominant process on LHOS-containing Zn electrode is the reduction of metallic zinc either in the form of solid zinc compounds (ZnO or Zn(OH)₂) or from solution (zincate ions) during battery charging and the reverse processes during battery discharge. LHOS metals or LHOS compounds are the following but not limited to Pt, Fe, Pd, Ni, Co, NiSO₄, and other inorganic or organic materials having low hydrogen overvoltage and possessing electrical conductivity or turning into such by electrochemical or other processes holding within the battery.

Described Zn electrode could be used in zinc-air, zinc-nickel, zinc-silver, and any type of alkaline electrically rechargeable battery system where the negative pole is the Zn electrode.

The basic component of the electrolyte is NaOH or KOH at 100-400 g l⁻¹ concentration. It can also contain additives, such as F⁻, quaternary alkyl-ammonia salts, calcium zincate, etc., including LHOS.

Any type of separator could be used being described for alkaline batteries containing Zn electrode, for example of rayon type or microporous type, or any other type, such as provided in USSR Certificate of Authorship # 1391401.

The casing of the battery is conventional being used in Zn batteries. The casing material could be made of plastic or metal.

Zn electrode characteristics with and without LHOS are determined by cyclization and/or polarization curves. Cyclization is carried out in such a way as to discontinue charging of Zn electrode battery with either upon reaching some limiting charging voltage (or potential) or upon reaching predefined charge-time limit. Usually, the discharge of the battery is discontinued upon reaching some discharge value. However, for Zn-Ni battery, after several cycles deep charge is possible to apply for removing extra charged phase on Zn electrode being accumulated during battery cycling.

Zn electrode polarization is determined by reference electrodes, such as amalgamated-non-porous-Zn-reference-electrode, amalgamated cadmium reference electrode or mercury-oxide reference electrode, as described anywhere in electrochemical literature. Within this invention, reference electrode's tip (Luggin capillary) is a small-diameter PVC tube abutted to Zn electrode. Alkaline-electrolyte-absorber-cord passes through the tube hole for better electrolyte wetting.

The invention is described by the following drawings, where:
Figure 1 shows the sliced Zn electrode being polarized via counter electrode positioned only in one side of Zn electrode, where (1) is the counter electrode; (2) is the Zn electrode; (3) is the reference electrode tip facing to counter electrode (middle part); (4) is reference electrode tip not facing to counter electrode (middle part); (5) is the reference electrode tip facing to counter electrode (lower part); (6) is the reference electrode tip not facing to counter electrode (lower part).
Figure 2 shows cycle-life vs. efficiency relationship for Zn electrode with LHOS (1) and without LHOS (2) cycled as zinc-nickel battery.
Figure 3 shows polarization characteristic of Zn electrode at different parts of the Zn electrode (with and without LHOS).
Figure 4 shows Zn electrode anodic polarization curve containing no LHOS. Zn electrode polarizes on both sides.
Figure 5 shows Zn electrode anodic polarization curve containing LHOS. Zn electrode polarizes on both sides.
Figure 6 shows Zn electrode cathodic polarization curve containing no LHOS. Zn electrode polarizes on both sides.
Figure 7 shows Zn electrode cathodic polarization curve containing LHOS. Zn electrode polarizes on both sides.
Figure 8 shows cyclic volt-amperometric graph of Zn electrode, where (1) contains LHOS, and (2) contains no LHOS.

### EXAMPLES

The products and methods of the invention are illustrated but not limited to the following examples.

### Example 1

This example shows that LHOS-containing Zn electrode has better cyclability that such without LHOS.

Regular Zn electrode is prepared in the following manner. Pre-weighted constituents of Zn electrode's active mass (with binder) is well mixed until homogeneous paste is formed, applied to current collector and dried at 50 °C, 2 h. Here are the relative weights of Zn electrode constituents: ZnO - 4.5 g ; PTFE binder - 0.12 g ; electrode surface area is 4 cm x 8 cm, weight of current collector is 0.6 gr. Theoretical capacity of Zn electrode is ca 4 Ah. LHOS-containing Zn electrode is prepared by addition of 0.1 g NiSO₄*7H₂O into the active mass composition provided above, for regular Zn electrodes. In this invention, NiSO₄*7H₂O was introduced into the active mass composition of Zn electrode in the form of powder (particle size is in between 50-100 µm).

Zn electrodes (with and without LHOS) were tested with nickel oxide counter electrodes from commercially produced (Lugansk alkaline battery plant) NKGK-11 D type battery. Two nickel oxide electrodes with a total actual capacity of 2.4 Ah have been used for each Zn electrode, each of nickel oxide counter electrodes being positioned on two sides of the same Zn electrode.

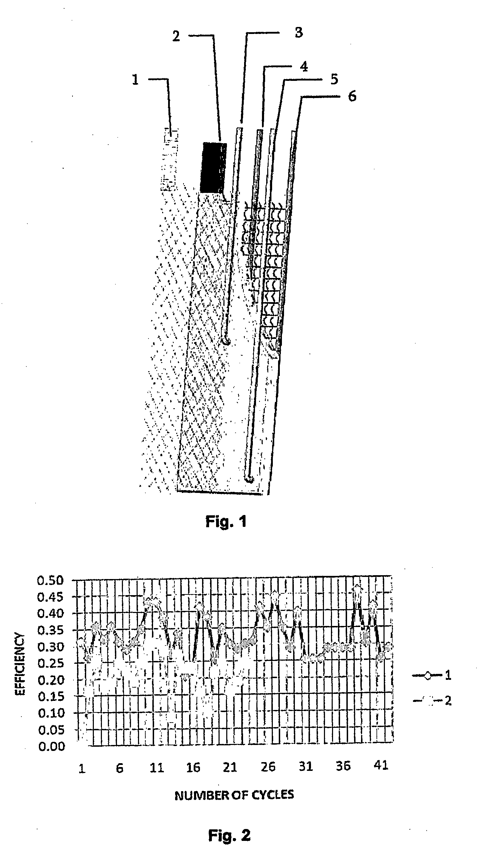

In Figure 1, sliced Zn electrode is shown, where current collector is also visible.

In Figure 2, cycle-life tests are provided for LHOS-containing Zn electrode (1) and without LHOS (2). Discharge efficiency of the electrode is defined as the ratio of actual Zn electrode capacity (discharge capacity is the amount of charge provided by the electrode) to the theoretical capacity of Zn electrode. Each cycle comprises the following steps:
- charging: 20 mA cm⁻² (up to 2.05-2.1 V, or ca 6 h);
- rest: 1 h;
- discharging: 30 mA cm⁻² until almost total discharge (down to 0.5 V);
- rest: 1 h.

Batteries have been cycled in the specially designed automatic test-machine. As the actual capacity of Zn electrode is less than that of double nickel oxide electrodes, hence, the capacity provided by the battery is ascribable to Zn electrode (Zn electrode's capacity is the limiting capacity of the battery).

After 5 cycles, the battery have undergone a deep discharge until 0.0 V at current density 10 mA cm⁻², in order to remove extra charge on Zn electrode that is accumulated during cycling because of differences of charge efficiencies on Zn and nickel oxide electrodes. As it follows from Figure 2, LHOS-containing Zn electrode showed better performance than regular Zn electrode.

Post mortem examination of two electrodes after cyclization (Figure 2) showed that LHOS-containing Zn electrode exhibited much lesser dendrites than the one having no LHOS. This is one of the reasons of enhanced cyclability of LHOS-containing Zn electrode.

Post mortem examination of two electrodes after cyclization showed that LHOS-containing Zn electrode appeared to be free of active mass redistribution, while about the quarter of Zn electrode's (containing no LHOS) current collector was naked because of Zn electrode shape change. This is one of the reasons of enhanced cyclability of LHOS-containing Zn electrode. Also, visual examination showed that LHOS-containing Zn electrode's active mass is homogenous, free of patches.

LHOS-containing Zn electrode failed to cycle further because the copper grid has been disintegrated at the lead part of Zn electrode. On the other hand, regular Zn electrode failed to cycle further by other reasons, such as passivation, shape change and presence of inactive isles present within the Zn electrode. Presence of inactive isles is easily discerned under microscope when Ni wire is applied to these inactive parts of the discharged Zn electrode soaked with alkaline electrolyte. Evolved hydrogen on Ni wire speaks about presence of charged phase, i.e. presence of metallic Zn in the active mass, which has not undergone oxidation to provide current to external load.

### Example 2

This example shows that the presence of LHOS lowers the polarization difference between the two sides of the same Zn electrode, i.e. LHOS averages potential distribution within the Zn electrode.

For this purpose, four reference electrodes were attached on both sides of the same Zn electrode (with and without LHOS), as is depicted in Figure 1. (3) and (4) reference electrodes' tips are positioned on the middle part of Zn electrode (where electric field intensity is lower, hence the polarization is lesser). Reference electrode (3) faces to counter electrode (1), while reference electrode (4) is positioned on the opposite side of Zn electrode (2) which does not face the counter electrode. (5) and (6) reference electrodes' tips are positioned on the edge of Zn electrode (the bigger the electric field intensity, the larger the polarization is). Reference electrode (5) faces to counter electrode (1), while reference electrode (6) is positioned on the opposite side of Zn electrode (2).

Zn electrodes (with and without LHOS), are prepared as described in Example 1. Here, polarization of electrodes was determined manually by changing the intensity of current flowing through the battery.

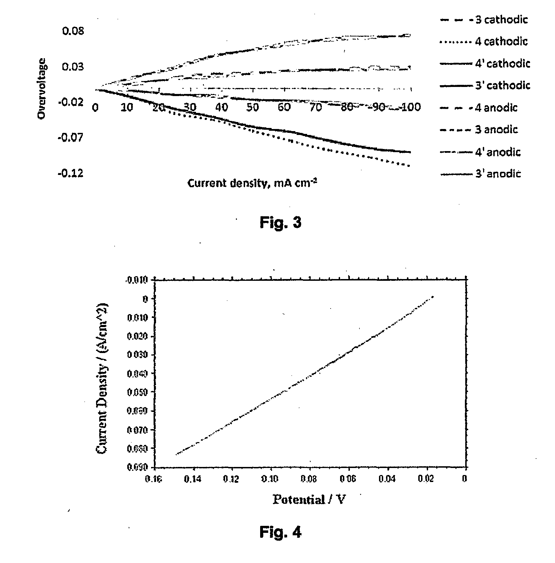

Figure 3 shows anodic and cathodic polarization curves - at four positions (2 on each side) of Zn electrode - for LHOS-containing Zn electrode and regular Zn electrode. Designation of reference electrodes (3 cathodic), (4 cathodic) in Figure 3 correspond to reference electrode tips of Figure 1 as (3) and (4) for regular Zn electrode. Designation of LHOS-containing Zn electrode of the reference electrodes (3' cathodic), (4' cathodic) in Figure 3 correspond to reference electrode tips of Figure 1 as (3) and (4), respectively.

As the 5 and 6 reference electrodes (as well as 5' and 6' reference electrodes designated in Fig. 3) showed the same polarization pattern as is described for reference electrodes 3 and 4, and, hence, are not included in the figure.

Figure 3 shows that the polarization differences on both the sides of the same electrode of LHOS-containing Zn electrode are lower than the same for the regular Zn electrode.

As it follows from Figure 3, lesser active mass relocation would occur with LHOS-containing Zn electrode during longer periods of charge-discharge tests, than for regular Zn electrode. This is important in three-electrode battery systems, e.g. in zinc-air batteries, when Zn electrode is charged via auxiliary electrode and is discharged by oxygen electrode.

### Example 3

This example shows that the presence of LHOS lowers the polarization difference as between the 2 points of the same side of the Zn electrode, i.e. LHOS averages potential distribution within the Zn electrode surface.

Averagely, polarization difference in between electrodes 3 and 5 (Figure 1) was ca. 20 mV for LHOS-containing Zn electrode while it is ca 50 mV in between the electrodes 3 and 5 the for regular Zn electrode (Figure 1).

Thus, LHOS-containing Zn electrode is less prone to active mass redistribution (shape change) and passivation than the regular electrodes.

### Example 4

This example shows that LHOS-containing Zn electrode has better discharge characteristics than the regular Zn electrode.

For this purpose, anodic polarization studies performed. Polarization of Zn electrodes (with and without LHOS) has been carried out on CH Instruments 600 workstation (USA produce) potentiostat. For cutting deep polarization curves, the Zn electrodes were prepared only of 1 cm² surface area, as the maximal polarization current on CH Instruments 600 instrument is 200 mA.

Zn electrodes, both with and without LHOS, were prepared with the method described in Example 1.

The reference electrode, used for the determination of Zn electrode polarization, was an amalgamated-non-porous-Zn-reference-electrode immersed in the same solution as the Zn-Ni battery has. The reference electrode bridged with Zn electrode compartment via PVC small-sized tube.

Electrodes scanned at 0.01 V per sec rate.

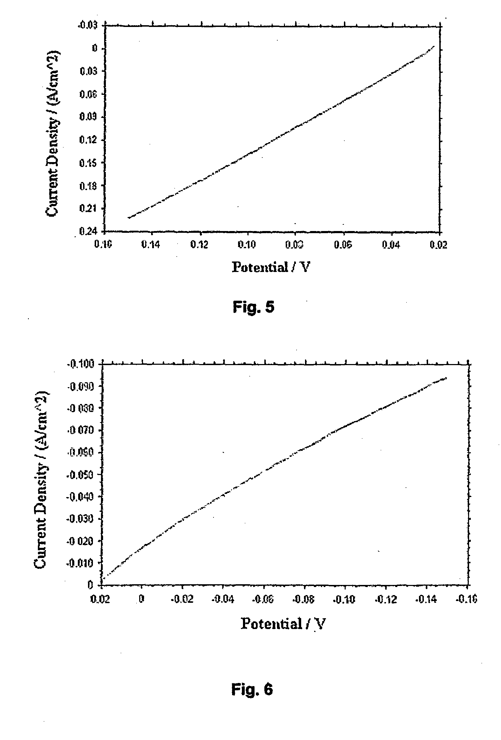

Regular Zn electrode's anodic polarization curve is presented in Figure 4, while the polarization characteristic of LHOS-containing Zn electrode is presented in Figure 5.

Comparison of these two plots shows that LHOS-containing Zn electrode is polarized at lesser extent than the regular Zn electrode. Juxtaposition of Figure 4 and Figure 5 permits to conclude that LHOS-containing Zn electrode is less prone to passivation, also, zincate ion aging occurs at lesser degree.

Juxtaposition of Figure 4 and Figure 5 shows that LHOS-containing Zn electrode could withstand higher current loads with higher discharge voltages than the regular Zn electrode.

### Example 5

This example shows that LHOS-containing Zn electrode perform better charging (cathodic) characteristics than the one containing no LHOS.

For this purpose, cathodic polarization studies have been made. Polarization of Zn electrodes (with and without LHOS) has been carried out on CH Instruments 600 workstation (USA produce). Small-sized Zn electrodes were used (1 cm²) for cutting deep polarization curves, as the maximal polarization current of on CH Instruments 600 instrument is 200 mA.

The composition of LHOS-containing Zn electrode and regular Zn electrode were correspond to Example 1.

Amalgamated-non-porous-Zn-reference-electrode being immersed in the same concentration of Zn-Ni battery electrolyte is used for the determination of Zn electrode polarization. The reference electrode is bridged with Zn electrode compartment via PVC small-sized tube. Electrodes were scanned at 0.01 V per sec rate.

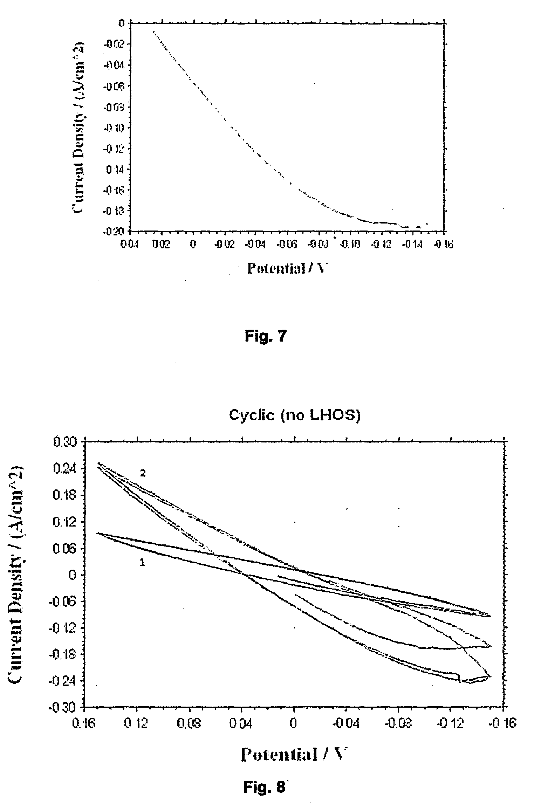

Cathodic polarization curves of regular Zn electrode is presented in Figure 6, while polarization characteristic of LHOS-containing Zn electrode is presented in Figure 7.

Comparison of these two plots shows that LHOS-containing Zn electrode is polarized at lesser degree than the regular Zn electrode. Juxtaposition of Figure 6 and Figure 7 permits to conclude that LHOS-containing Zn electrode is less prone to dendritic propagation, as dendrites appear at higher cathodic overvoltage values. Juxtaposition of Figure 6 and Figure 7 shows that battery with LHOS-containing Zn electrode could be charged at higher loads (at shorter periods of time) than the battery with regular Zn electrode.

### Example 6

This example shows that LHOS-containing Zn electrode has better reversible characteristics than the one containing no LHOS.

For this purpose, cyclic volt-amperometric studies have been made. Cyclic testing of Zn electrodes (with LHOS and without LHOS) has been carried out on CH Instruments 600 workstation. For cutting deep polarization curves, the surface area of Zn electrodes was taken 1 cm².

LHOS-containing Zn electrode (1) and regular Zn electrode (2) were prepared as described in Example 1.

The reference electrode, used for the determination of Zn electrode polarization, was amalgamated-non-porous-Zn-reference-electrode immersed in the same electrolyte concentration as the Zn-Ni battery has. The reference electrode is bridged with Zn electrode via PVC small-sized tube.

Electrodes were scanned at 0.01 V per sec rate during five polarization segments. High and low limiting overvoltage values are +0.15 V and -0.15 V for anodic and cathodic flanks, respectively.

In Figure 8, the cyclic volt-amperometric graphs of Zn electrodes (with and without LHOS) are presented.

Comparison of two cyclic volt-amperometric figures show that LHOS-containing Zn electrode exhibits better reversibility (lesser polarization both on the anodic and cathodic flanks of the plots) than regular Zn electrode, which reinstates higher cyclability of LHOS-containing Zn electrode (re Figure 2).

## Claims

1. A rechargeable zinc electrode for the use in an electrically rechargeable battery with alkaline aqueous electrolyte, wherein said electrode contains in its active mass at least one Low Hydrogen Overvoltage Substance (LHOS) possessing a Hydrogen Overvoltage value at least 0.5 Volt lower than that of zinc in the same conditions,
said LHOS being a metal chosen from the group consisting of Pt, Pd, Ni, Fe and Mn metals or their alloys, or a chemical compound of the said metals and,
said LHOS being in a form of powder or particles.

2. An electrode according to claim 1, wherein at least one of the LHOS is a salt or its precursors in the form of metallo-organic compound.

3. An electrode according to claim 1 or 2, wherein said at least one of the LHOS is a chemical compound containing Ni.

4. An electrode according to any of claims 1 to 3, wherein at least one LHOS is deposited on carriers, such as silicates or polymers.

5. An electrode according to any of claims 1 to 4, wherein the Zn electrode active mass contains 0.5-10 weight% of LHOS.

6. An electrode according to any of claims 1 to 5, wherein at least one LHOS is introduced at a higher concentration in the zone where the electric field is higher, typically on the edges, the bottom side and the side surfaces of the said electrode.

7. An electrode according to any of claims 1 to 6, wherein the LHOS quantity is increasing gradually from the inner part of the electrode, close to the current collector, up to the electrode surface.

8. An electrode according to any of claims 1 to 7, wherein the zinc electrode is composed of at least two layers out of which at least one layer contains LHOS.

9. A method for the production of an electrode for use in an electrically rechargeable battery with alkaline aqueous electrolyte, said electrode containing in its active mass at least one LHOS according to claim 1, said method comprising the addition of LHOS particles in the active mass of Zn electrode.

10. A method according to claim 9 for the production of an electrode for use in an electrically rechargeable battery with alkaline aqueous electrolyte, said electrode containing it its active mass at least one LHOS, the method comprising the application of LHOS, on the total or partial surface of the Zn electrode, in the form of a powder, the particles of which have an average diameter between 10 to 1000 µm.

11. An electrically rechargeable battery comprising at least one anode electrode according to one of the claims 1 to 8, and a suitable cathode.

12. An electrically rechargeable battery according to claim 11, wherein a strong alkaline electrolyte is used.

13. An electrically rechargeable battery according to one of the claims 11 or 12,comprising at least an air electrode as cathode.

14. An electrically rechargeable battery according to one of the claims 11 or 12, comprising at least a nickel-oxide or silver electrode as cathode.

## Patentansprüche

1. Wiederaufladbare Zinkelektrode für die Verwendung in einer elektrisch wiederaufladbaren Batterie mit alkalischem wässrigem Elektrolyten, wobei die Elektrode in ihrer aktiven Masse mindestens eine Substanz mit niedriger Wasserstoffüberspannung (LHOS) mit einem um mindestens 0,5 Volt niedrigeren Wasserstoffüberspannungswert als derjenige von Zink bei den gleichen Bedingungen besitzt,
wobei es sich bei der LHOS um ein Metall handelt, das aus der Gruppe ausgewählt ist, die besteht aus: Pt-, Pd-, Ni-, Fe- und Mn-Metallen oder deren Legierungen oder einer chemischen Verbindung dieser Metalle, und
die LHOS in Form eines Pulvers oder Partikeln ist.

2. Elektrode nach Anspruch 1, wobei es sich bei mindestens einer der LHOS um ein Salz oder seine Vorgänger in Form von metallorganischer Verbindung handelt.

3. Elektrode nach Anspruch 1 oder 2, wobei es sich bei der mindestens einen der LHOS um eine Ni enthaltende chemische Verbindung handelt.

4. Elektrode nach einem der Ansprüche 1 bis 3, wobei mindestens eine LHOS auf Trägern wie etwa Silicaten oder Polymeren abgeschieden ist.

5. Elektrode nach einem der Ansprüche 1 bis 4, wobei die aktive Masse der Zn-Elektrode 0,5-10 Gewichts-% LHOS enthält.

6. Elektrode nach einem der Ansprüche 1 bis 5, wobei in der Zone, in der das elektrische Feld stärker ist, typischerweise an den Rändern, der Unterseite und den Seitenflächen der Elektrode, mindestens eine LHOS in einer höheren Konzentration eingebracht ist.

7. Elektrode nach einem der Ansprüche 1 bis 6, wobei die LHOS-Menge vom inneren Teil der Elektrode, nah beim Stromkollektor bis zur Elektrodenoberfläche hin allmählich zunimmt.

8. Elektrode nach einem der Ansprüche 1 bis 7, wobei die Zinkelektrode aus mindestens zwei Schichten zusammengesetzt ist, von denen mindestens eine Schicht LHOS enthält.

9. Verfahren zum Herstellen einer Elektrode für die Verwendung in einer elektrisch wiederaufladbaren Batterie mit alkalischem wässrigem Elektrolyten, wobei die Elektrode in ihrer aktiven Masse mindestens eine LHOS nach Anspruch 1 enthält, wobei das Verfahren die Zugabe von LHOS-Partikeln in die aktive Masse einer Zn-Elektrode umfasst.

10. Verfahren nach Anspruch 9 zum Herstellen einer Elektrode für die Verwendung in einer elektrisch wiederaufladbaren Batterie mit alkalischem wässrigem Elektrolyten, wobei die Elektrode in ihrer aktiven Masse mindestens eine LHOS enthält, wobei das Verfahren das Aufbringen von LHOS, auf der ganzen Oberfläche oder einer Teiloberfläche der Zn-Elektrode, in Form eines Pulvers umfasst, dessen Partikel einen durchschnittlichen Durchmesser zwischen 10 und 1000 µm aufweisen.

11. Elektrisch wiederaufladbare Batterie, mindestens eine Anodenelektrode nach einem der Ansprüche 1 bis 8 und eine geeignete Kathode umfassend.

12. Elektrisch wiederaufladbare Batterie nach Anspruch 11, wobei ein stark alkalischer Elektrolyt verwendet wird.

13. Elektrisch wiederaufladbare Batterie nach einem der Ansprüche 11 oder 12, mindestens eine Luftelektrode als Kathode umfassend.

14. Elektrisch wiederaufladbare Batterie nach einem der Ansprüche 11 oder 12, mindestens eine Nickeloxidelektrode oder Silberelektrode als Kathode umfassend.

## Revendications

1. Electrode de zinc rechargeable destinée à être utilisée dans une batterie électriquement rechargeable pourvue d'un électrolyte alcalin aqueux, ladite électrode contenant dans sa masse active au moins une substance à faible surtension d'hydrogène (LHOS) possédant une valeur de surtension d'hydrogène au moins 0,5 volt plus basse que celle du zinc dans les mêmes conditions,
ladite LHOS étant un métal choisi dans le groupe constitué des métaux Pt, Pd, Ni, Fe et Mn ou de leurs alliages, ou d'un composé chimique desdits métaux et,
ladite LHOS se présentant sous forme de poudre ou de particules.

2. Electrode selon la revendication 1, dans laquelle au moins l'une des LHOS est un sel ou ses précurseurs sous la forme d'un composé métallo-organique.

3. Electrode selon la revendication 1 ou 2, dans laquelle ladite au moins une des LHOS est un composé chimique contenant du Ni.

4. Electrode selon l'une quelconque des revendications 1 à 3, dans laquelle au moins une LHOS est déposée sur des supports, tels que des silicates ou des polymères.

5. Electrode selon l'une quelconque des revendications 1 à 4, dans laquelle la masse active de l'électrode de Zn contient de 0,5 à 10 % en poids de LHOS.

6. Electrode selon l'une quelconque des revendications 1 à 5, dans laquelle au moins une LHOS est introduite à une concentration plus élevée dans la zone où le champ électrique est plus élevé, typiquement sur les bords, le côté inférieur et les surfaces latérales de ladite électrode.

7. Electrode selon l'une quelconque des revendications 1 à 6, dans laquelle la quantité de LHOS augmente graduellement de la partie interne de l'électrode, près du collecteur de courant, jusqu'à la surface de l'électrode.

8. Electrode selon l'une quelconque des revendications 1 à 7, dans laquelle l'électrode de zinc est composée d'au moins deux couches dont au moins une contient la LHOS.

9. Procédé pour la production d'une électrode destinée à être utilisée dans une batterie électriquement rechargeable pourvue d'un électrolyte alcalin aqueux, ladite électrode contenant, dans sa masse active, au moins une LHOS selon la revendication 1, ledit procédé comportant l'addition de particules de LHOS dans la masse active de l'électrode de Zn.

10. Procédé selon la revendication 9 pour la production d'une électrode destinée à être utilisée dans une batterie électriquement rechargeable pourvue d'un électrolyte alcalin aqueux, ladite électrode contenant dans sa masse active au moins une LHOS, le procédé comportant l'application de la LHOS, sur la surface complète ou partielle de l'électrode de Zn, sous la forme d'une poudre, dont les particules ont un diamètre moyen compris entre 10 et 1 000 µm.

11. Batterie électriquement rechargeable comportant au moins une électrode anodique selon l'une des revendications 1 à 8, et une cathode adaptée.

12. Batterie électriquement rechargeable selon la revendication 11, dans laquelle un électrolyte alcalin fort est utilisé.

13. Batterie électriquement rechargeable selon l'une des revendications 11 ou 12, comportant au moins une électrode à air en tant que cathode.

14. Batterie électriquement rechargeable selon l'une des revendications 11 ou 12, comportant au moins une électrode d'oxyde de nickel ou d'argent en tant que cathode.
